# EUROPÄISCHE PATENTSCHRIFT

(11) **EP 3 785 285 B1**
(45) Veröffentlichungstag und Bekanntmachung des Hinweises auf die Patenterteilung: **15.06.2022**
(21) Anmeldenummer: 19701086.1
(22) Anmeldetag: 17.01.2019
(51) Int. Cl.: H01H 39/00, B60L 3/04, H01H 1/20, H01H 9/50

(54) **HOCHVOLTSCHALTER, HOCHVOLTBORDNETZ IN EINEM KRAFTFAHRZEUG UND VERFAHREN ZUM BETREIBEN EINES HOCHVOLTSCHALTERS**
HIGH-VOLTAGE SWITCH, HIGH-VOLTAGE ELECTRICAL SYSTEM IN A MOTOR VEHICLE, AND METHOD FOR OPERATING A HIGH-VOLTAGE SWITCH
COMMUTATEUR À HAUTE TENSION, ALIMENTATION DE BORD À HAUTE TENSION DANS UN VÉHICULE AUTOMOBILE ET PROCÉDÉ DE FONCTIONNEMENT D'UN COMMUTATEUR À HAUTE TENSION

(30) Priorität: 24.04.2018 DE 102018109824
(43) Veröffentlichungstag der Anmeldung: 03.03.2021
(73) Patentinhaber: Auto-Kabel Management GmbH, 79688 Hausen i.W. (DE)
(72) Erfinder: CACCIATORE, David, 47804 Krefeld (DE); TAZARINE, Wacim, 41812 Erkelenz (DE); RAFATI, Sohejl, 41236 Mönchengladbach (DE)
(74) Vertreter: Cohausz & Florack
(86) Internationale Anmeldenummer: PCT/EP2019/051174
(87) Internationale Veröffentlichungsnummer: WO 2019/206467

(56) Entgegenhaltungen:
- WO-A1-2017/157704
- DE-A1-102012 212 509
- DE-A1-102016 101 252

## Beschreibung

Der Gegenstand betrifft ein Hochvoltschalter, insbesondere in automotiven Anwendungen, beispielweise in hybrid-elektrischen Fahrzeugen (HEV), batterie-elektrischen Fahrzeugen (BEV) oder Brennstoffzellen-Fahrzeugen (FCV). Darüber hinaus betrifft der Gegenstand ein Verfahren zum Betreiben eines solchen Hochvoltbornetzsystems.

Der Anteil an elektrisch betriebenen Fahrzeugen wird in Zukunft steigen. Hierbei ist ein schrittweiser Übergang von fossilen Treibstoffen zu elektrischen Fahrzeugantrieben zu beobachten. Die gegenständliche Anwendung ist beispielsweise in Hybridfahrzeugen (HEV) batterie-elektrischen Fahrzeugen (BEV) als auch in Brennstoffzellen-Fahrzeugen (FCV) sinnvoll.

Da in den nächsten Jahren und Jahrzenten der Anteil an elektrisch betriebenen Fahrzeugen, insbesondere mit elektrischen Primärantrieben, zunehmen wird, verändern sich die Anforderungen an die Bordnetze erheblich. Maßgeblich für die Akzeptanz von elektrischen Antrieben ist dabei die Zuverlässigkeit als auch Sicherheit des Hochvoltbornetzsystems.

Abhängig von dem Grad der Elektrifizierung, also welcher Anteil der Antriebsleistung elektrisch ist, liegt die elektrische Leistung im Bereich zwischen 10 und 120 KW. Im Vergleich zu herkömmlichen 12V Bordnetzen ist die Betriebsspannung in den Bordnetzen von elektrisch betriebenen Fahrzeugen erheblich höher. Dies wird durch die Integration von Hochvolt-Batterien als aufladbare Energiespeicher ermöglicht. Durch die erheblich höheren Betriebsspannungen steigt die Komplexität des Bordnetzes und somit auch die Anforderungen an Bordnetzkomponenten wie Relais, Leitungen und Sicherungen.

Insbesondere zu sicherheitskritischen Zeitpunkten ist die verlässliche Abschaltung des Hochvoltbordnetzes von der Hochvoltbatterie ein ganz wesentlicher Punkt. Bei Spannungen von bis zu 1000V DC und bei Kurzschlussströmen in Kiloamperbereich sind die Anforderungen an Schaltrelais und Sicherungen erheblich. Das zuverlässige Schaltverhalten der Relais als auch der Sicherungen muss sowohl im Normalfall als auch im Falle eines Unfalls sichergestellt sein. Im Betriebsfall ist ein Schalten bei erheblich geringeren Strömen notwendig als im Falle eines Unfalls oder einer Störung. Im Betriebsfall, also beispielsweise bei Wartung und Instandhaltung, muss zwar eine galvanische Trennung erfolgen, die zu schaltenden Ströme sind aber relativ gering. Die Abschaltung kann im Betriebsfall oder auch in sonstigen Sondersituationen, in dem kein Kurzschlussstrom fließt, über Schaltrelais ermöglicht werden.

Im Kurzschlussfall fließen jedoch erheblich höhere Ströme und auch dann muss ein sicheres Abschalten möglich sein. Herkömmlicherweise wird hierzu sowohl High-side als auch Low-side eine Kombination von Sicherungen und Relais genutzt. Die Sicherungen dienen zum Abschalten im Kurzschlussfall, wohingegen die Relais in der Regel zum Abschalten im Betriebsfall dienen.

Aus der DE 10 2016 101 252 A1 ist ein Hochvoltbordnetzsystem bekannt, bei welchem unter Ausnutzung der Levitation am Schaltrelais eine Schaltspannung reduziert wird.

Aus dem Dokument WO 2017/157704 A1 sind ein Hochvoltschalter mit einem pyrotechnischen Antrieb und eine Überstromdetektionseinheit mit einem Brückenkontakt bekannt.

Gegenständlich ist erkannt worden, dass die herkömmliche Kombination aus Sicherung und Relais einen erheblichen Aufwand bedeutet. Die Auslegung der jeweiligen Kombination von Sicherung und Relais muss aufeinander abgestimmt sein, um auch im Kurzschlussfall ein sicheres Auslösen der Sicherung zu gewährleisten. Außerdem ist erkannt worden, dass bisherige Schaltungen komplex und durch verschiedene Schaltkomponenten aufwändig sind. Außerdem stehen nicht an allen Stellen des Fahrzeugs, in denen eine Notfallabschaltung erforderlich sein könnte, ein Auslösesignal zum Auslösen einer pyrotechnischen Sicherung zur Verfügung. Gerade eine zusätzliche Verkabelung soll vermieden werden und dennoch eine ausreichende Sicherheit zur Verfügung gestellt werden.

Somit lag dem Gegenstand die Aufgabe zugrunde, einen Hochvoltschalter zur Verfügung zu stellen, welcher mit wenigen Baugruppen ein sicheres Auslösen im Fehlerfall gewährleistet.

Diese Aufgabe wird durch einen Hochvoltschalter nach Anspruch 1, ein Hochvoltbordnetz nach Anspruch 14 sowie ein Verfahren nach Anspruch 15 gelöst.

Ein gegenständlicher Hochvoltschalter ist bevorzugt zwischen einer Hochvoltbatterie und einem elektrischen Antrieb angeordnet. Im Gegensatz zu herkömmlichen 12V, 24V oder 48V Bordnetzen sind in Hochvoltbordnetzen von elektrisch angetriebenen Fahrzeugen sowohl der Batteriepluspol (High-side) als auch der Batterieminuspol (Low-side) über ein elektrisches Kabel mit dem elektrischen Motor verbunden. Die Masserückführung erfolgt in diesen Fällen nicht über die Karosse.

Hochvoltbatterien im Sinne des Gegenstandes sind bevorzugt wiederaufladbare Energiespeicher, welche Ausgangsspannungen zwischen einigen 100V bis zu einigen 1000V unmittelbar oder über geeignete Hochsetzsteller zur Verfügung stellen können. Ausgangsseitig des Hochvoltbordnetzsystems ist in der Regel noch ein DC/DC Wandler zur Wandlung der Eingangsspannung in eine geeignete Ausgangsspannung für den elektrischen Antrieb vorgesehen. Die Ausgangsspannung am Energiespeicher wird als Gleichspannungen (DC) über die elektrischen Leitungen des Hochvoltbordnetzsystems an den elektrischen Antriebsmotor angelegt.

Die elektrischen Antriebe werden mit sehr hohen Leistungen betrieben, welche zwischen 10kW und über 120kW liegen. Diese hohen Leistungen bedingten auch bei den genannten hohen Spannungen noch sehr hohe Ströme.

Während eines Normalbetriebs werden solche hohen Ströme in der Regel über den Hochvoltschalter geführt. Gegenständlich ist nun erkannt worden, dass für eine Notfallabschaltung, beispielsweise im Crashfall, die Levitation im Hochvoltschalter als Schaltimpuls genutzt werden kann.

Da im Notfall, z.B. bei einem Kurzschluss, sehr hohe Ströme auftreten, kann es an dem Hochvoltschalter, über den der Kurschlussstrom geführt ist, zu einer sogenannten Levitation kommen. Levitation wird auch als "electric magnetic repulsion" bezeichnet. Dabei kommt es trotz angesteuerter Spule im Relais zu einer Zwangsbewegung des Brückenkontakts. Die Ursache hierfür liegt in einer elektromagnetischen Abstoßung zwischen zwei gegenläufig stromdurchflossenen Leitern. Im Falle des Hochvoltschalters entsteht die Abstoßung dadurch, dass der Festkontakt keinen Vollflächenkontakt mit dem Brückenkontakt bildet. Das führt dazu, dass der Strom über den Festkontakt zu der Kontaktstelle mit dem Brückenkontakt fließt. Die Kontaktstelle ist eine Engstelle irgendwo auf den Stirnflächen welche zwischen Festkontakt und Brückenkontakt liegen. Der Strom muss daher entlang von der Mantelfläche des Festkontaktes über die Stirnfläche des Festkontakts zu der Engstelle fließen und von dort über die Stirnfläche des Brückenkontakts zurück zur Mantelfläche des Brückenkontakts. Damit sind die Stromflüsse auf den Stirnflächen entgegen gesetzt. Die dadurch entstehenden, nicht orthogonalen Stromrichtungen führen zur Abstoßung zwischen dem Brückenkontakt und dem Festkontakt. Kommt es zu einer Levitation im Relais, kann es zu Kontaktöffnungen kommen, und über diese Kontaktöffnung können Lichtbögen zwischen dem Brückenkontakt und dem Festkontakt entstehen.

Gegenständlich wird der durch die Levitation erzeugte erhöhte Widerstand ausgenutzt, um eine zusätzlicher Zuleitung einer Steuerleitung zu vermeiden. Die Zündspannung für einen Antrieb, insbesondere einen pyrotechnischen Antrieb wird unmittelbar über dem brennenden Lichtbogen des Brückenkontakts aufgebaut, so dass ohne einen externen Zündimpuls der Schalter durch die Trennschaltung, insbesondere den pyrotechnischen Antrieb aufgetrennt wird.

Bei dem gegenständlichen Hochvoltschalter sind ein erster und ein zweiter Festkontakt vorgesehen, welche beide bevorzugt in dem Gehäuse des Hochvoltschalters angeordnet sind. Jeder der Festkontakte ist über einen außen am Gehäuse angeordneten Anschlusskontakt kontaktierbar. Insbesondere ist ein erster Anschlusskontakt mittelbar mit dem Energiespeicher verbunden und ein zweiter Anschlusskontakt mittelbar mit einem Antriebsstrang. Auch eine unmittelbare Verbindung, ohne ein dazwischen geschaltetes Netzwerk von elektrischen und elektronischen Bauelementen ist möglich.

Die Festkontakte des Hochvoltschalters werden über einen Brückenkontakt im geschlossenen Zustand des Hochvoltschalters miteinander kurz geschlossen. Hierzu wird der Brückenkontakt mit einer Anpresskraft gegen zumindest einen, vorzugsweise beide Festkontakte gedrückt. Über ein Anheben des Brückenkontakts kann die elektrische Verbindung zwischen den beiden Festkontakten getrennt werden. Der Hochvoltschalter ist bevorzugt als Schließer gebildet. Über eine Bestromung einer Spule kann ein Schließen die Verbindung zwischen den Festkontakten bewirken, in dem der Brückenkontakt gegen zumindest einen, vorzugsweise beide Festkontakte gedrückt wird.

Der Brückenkontakt ist bevorzugt beweglich zu beiden Festkontakten, kann aber auch an einem Festkontakt angeschlagen sein und nur relativ zu dem zweiten Festkontakt beweglich sein.

Bei Stromlosschaltung im Normalbetrieb wird der Brückenkontakt von zumindest einem der Festkontakte abgehoben. Dies ist der normale Betriebszustand, in dem ein Schalten unproblematisch ist, da die zu schaltenden Ströme maximal wenige 100A betragen.

Wird gegen den Brückenkontakt mit einer Kraft entgegen der Anpresskraft gedrückt, so kann der Brückenkontakt von den Festkontakten abgehoben werden. Hierzu ist ein Antrieb vorgesehen, der dieses Abheben bewirken kann.

Im Notfall, beispielsweise bei einem Crash oder einem sonstigen Kurzschluss können Ströme über den Hochvoltschalter fließen, die weit höher liegen als die im normalen Betriebszustand fließenden Ströme.

Diese in einem Fehlerfall fließenden Ströme sind derart hoch, das es zwischen zumindest einem Festkontakt und dem Brückenkontakt zu einer oben beschriebenen Levitation führen kann. Durch die gegenläufigen Ströme an den Stirnflächen von Festkontakt und Brückenkontakt wird der Brückenkontakt gegen die Anpresskraft von dem Festkontakt abgehoben. Die durch die hohen elektrischen Ströme verursachte elektromagnetische Abstoßungskraft zwischen Brückenkontakt und zumindest einem der Festkontakte kann größer sein als die Anpresskraft.

Da in diesem Fall der Trennvorgang schnell von statten geht und der räumliche Abstand zwischen Brückenkontakt und Festkontakt nur wenige zehntel Millimeter bis wenige Millimeter beträgt, bildet sich unmittelbar beim Abtrennen ein Lichtbogen zwischen dem Festkontakt und dem Brückenkontakt aus. Ein Reststrom fließt über den Lichtbogen von dem Festkontakt zu dem Brückenkontakt beziehungsweise umgekehrt.

Im Normalbetrieb ist der Hochvoltschalter geschlossen und der Spannungsabfall zwischen den beiden Festkontakten ist nahezu null. Die Festkontakte sind über den Brückenkontakt kurzgeschlossen und ein Übergangswiderstand kann kleiner als 1mΩ sein. Selbst bei hohen Strömen erfolgt in diesem Fall nur ein äußerst geringer Spannungsabfall zwischen den Festkontakten beziehungsweise den mit den Festkontakten verbundenen Anschlusskontakten.

Eine Messschaltung, beispielsweise ein passiver Widerstand kann parallel zu den Festkontakten geschaltet sein. Über diese Messschaltung kann ein Spannungsabfall zwischen den Festkontakten detektiert werden. Die Messschaltung ist bevorzugt passiv und ist dazu eingerichtet, den Spannungsabfall zwischen den Festkontakten im Falle einer Levitation zwischen zumindest einem Festkontakt und dem Brückenkontakt zu sensieren. Ein solcher Spannungsabfall kann einige10V bis einige 100V betragen.

Wird ein zuvor bestimmter Spannungsabfall detektiert, so kann die Messschaltung den Antrieb derart ansteuern, dass der Antrieb auf den Brückenkontakt mit einer Kraft in Richtung der Abzugskraft wirkt. Dadurch verursacht der Antrieb, dass der noch brennende Lichtbogen durch ein Entfernen zwischen Brückenkontakt und Festkontakt gelöscht wird. Der Antrieb muss nur noch dafür sorgen, dass der verbleibende Strom, welcher über den Lichtbogen fließt getrennt wird. Somit führt die Levitation zu einem auslösen des Antriebs ohne ein externes Auslösesignal. Die über den entstehenden Lichtbogen abfallende Spannung ist ausreichend, den Antrieb auszulösen.

Die Messschaltung ist so gestaltet, dass sie insbesondere passiv feststellt, wenn der Spannungsabfall zwischen den Festkontakten und dem Brückenkontakt durch die Levitation bewirkt ist. In diesem Fall erfolgt eine automatische Auslösung des Antriebs derart, dass dieser mechanisch auf den Brückenkontakt wirkt. Hierbei wirkt eine Kraft, die in Richtung der Abzugskraft gerichtet ist. Diese Kraft bewirkt ein Durchtrennen der über den Lichtbogen noch bestehenden elektrischen Verbindung zwischen den beiden Festkontakten über den Brückenkontakt.

Bei einem Kurzschluss auf der Seite des Antriebsstrangs fließt über den Hochvoltschalter ein Kurzschlussstrom, welcher die Levitation bewirkt. Der durch die Levitation bewirkte Spannungsabfall löst den Antrieb automatisch aus, sodass der Antrieb gegen den Brückenkontakt wirken kann und somit eine verbleibende elektrische Verbindung zwischen den Festkontakten trennen kann. Auf eine externe Steuerleitung kann verzichtet werden.

Der Antrieb ist bevorzugt ein pyrotechnischer Antrieb, der durch die abfallende Spannung zwischen den Festkontakten auslösbar ist. Innerhalb des pyrotechnischen Antriebs kann ein Messwiderstand vorgesehen sein, der sich durch den aufgrund des Spannungsabfalls über die Festkontakte fließenden Strom derart erhitzt, dass der pyrotechnische Antrieb automatisch aktiviert wird. Ein solcher Widerstand kann die Messschaltung sein. Somit kann mit einer passiven Schaltung eine sehr sichere Trennung des Hochvoltschalters auch im Kurzschlussfall bewirkt werden. Dabei muss der Hochvoltschalter ohne den Antrieb nur für das Trennen der Betriebsströme ausgelegt sein. Dies führt zu erheblichen Kostenvorteilen gegenüber einem solchen Hochvoltschalter, der auch zum Trennen der Kurzschlussströme ausgebildet sein muss. Der gegenständliche Hochvoltschalter muss im Betriebsfall die Betriebsströme trennen können, im Fehlerfall wird durch den zusätzlichen Antrieb eine eventuell nicht vollständige Trennung des Hochvoltschalters abschließend aufgetrennt.

Der Brückenkontakt ist bevorzugt federbelastet mit einer Anpresskraft gegen die Festkontakte gedrückt. Auch ist es möglich, dass der Brückenkontakt durch eine magnetische Kraft gegen den Festkontakt gedrückt ist.

Gemäß einem Ausführungsbeispiel wird vorgeschlagen, dass die Messschaltung durch die Spannung zwischen den Festkontakten gespeist ist. Aufgrund des Spannungsabfalls im Falle der Levitation zwischen Festkontakt und Brückenkontakt kommt es zu einem Stromfluss über die Messschaltung. Somit wird die Messschaltung gespeist. Dies führt zu einer Auslösung des Antriebs, derart, dass der Antrieb auf den Brückenkontakt mit einer Kraft in Richtung der Abzugskraft wirkt.

Gemäß einem Ausführungsbeispiel wird vorgeschlagen, dass die Messschaltung passiv ist. Eine passive Messschaltung hat den besonderen Vorteil, dass keine zusätzliche elektrische Zuleitung zu dem Hochvoltschalter notwendig ist, um diesen für das Trennen von Kurzschlussströmen zu befähigen. Vielmehr kann ein gegenständlicher Hochvoltschalter ohne eine zusätzliche Beschaltung sicher einen Kurzschlussstrom trennen. Der Antrieb ist dabei so gebildet, dass dieser bei einem Überschreiten einer Spannung zwischen den Festkontakten automatisch auslöst. Das alleinige Auslösekriterium kann dabei die Spannung zwischen den Festkontakten sein. Ein definierter Widerstand der Messschaltung führt zu einem abhängig von diesem Spannungsabfall definierten Strom durch die Messschaltung, der für das Auslösen des Antriebs verantwortlich sein kann.

Gemäß einem Ausführungsbeispiel wird vorgeschlagen, dass im Falle der Levitation ein derartig hoher Strom über den Antrieb fließt, dass der Antrieb ausgelöst wird. Somit ist die Levitation das alleinige Auslösekriterium und führt zu einer abschließenden Trennung unabhängig von einer zusätzlichen Baugruppe.

Der gegenständliche Hochvoltschalter bzw. dessen Antrieb muss so ausgelegt sein, dass der Antrieb einen Reststrom, der aufgrund der Levitation fließt, trennen kann. Dieses Trennen kann dadurch bewirkt werden, dass der Antrieb den Brückenkontakt in Richtung der Abzugskraft beschleunigt und somit den Lichtbogen löscht. Auch ist es möglich, dass der Antrieb den Brückenkontakt in Richtung der Abzugskraft durchtrennt. Über den Brückenkontakt fließt im Falle der Levitation ein geringerer Strom als der Kurzschlussstrom. Der Strom wird durch den Widerstand des Lichtbogens bestimmt ist. Wird der Brückenkontakt durchtrennt, muss nur noch dieser fließende Strom getrennt werden. An der Trennstelle entlang des Brückenkontakts bildet sich kein weiterer Lichtbogen aus, da der Strom über dem Brückenkontakt nicht mehr groß genug ist. Vielmehr wird der noch brennende Lichtbogen zwischen dem Brückenkontakt und zumindest einem Festkontakt durch das Durchtrennen des Brückenkontakts gelöscht.

Ein Durchtrennen beziehungsweise Abheben des Brückenkontakts ist bevorzugt dadurch möglich, dass der Antrieb einen Bolzen aufweist. Im Falle der Auslösung des Antriebs wird der Bolzen bevorzugt pyrotechnisch aufgrund der Explosionsenergie in Richtung der Abzugskraft auf den Brückenkontakt beschleunigt. Der Brückenkontakt ist durch den Bolzen auftrennbar. Dabei kann der Bolzen an seiner dem Brückenkontakt zugewandten Stirnfläche eine Schneidfläche aufweisen. Insbesondere ist der Bolzen in Richtung des Brückenkontakts verjüngt, sodass dieser messerartig durch den Brückenkontakt hindurchgeführt werden kann.

Auch ist es möglich, dass der Brückenkontakt durch den Bolzen von einem oder beiden Festkontakten abhebbar ist. Hierbei kann der Bolzen gegen eine untere Fläche des Brückenkontakts drücken, die in Richtung der Festkontakte weist. Durch den Impuls des Bolzens wird der Brückenkontakt von den Festkontakten fort beschleunigt und von zumindest einem dieser abgehoben. Hierdurch wird der Abstand zwischen den Festkontakten und den Brückenkontakten vergrößert, sodass ein brennender Lichtbogen gelöscht wird.

Wie bereits erläutert, hat der Hochvoltschalter ein Gehäuse. Es wird bevorzugt, dass der Bolzen in dem Gehäuse geführt ist, in dem auch die Festkontakte und der Brückenkontakt angeordnet sind.

Ferner kann der Antrieb zumindest teilweise in dem Gehäuse angeordnet sein.

Auch ist es möglich, dass der Antrieb zusätzlich durch ein externes Steuersignal auslösbar ist. Ein solches externes Steuersignal kann beispielsweise ein Crashsignal z.B. ein Airbag-Steuersignal sein. Im Falle eines Crashs, ohne dass ein Kurzschluss auftritt, muss der Energiespeicher vom Antriebsstrang getrennt werden. Ein Crashsignal, beispielsweise ein Airbag-Steuersignal kann an dem Antrieb anliegen und entsprechend der Auslösung im Falle der Levitation den Antrieb auslösen. Dabei wird beispielsweise der pyrotechnische Antrieb durch das externe Signal gezündet und dies führt dazu, dass der Brückenkontakt von den Festkontakten abgehoben wird. In diesem Fall, in dem noch kein Kurzschlussstrom fließt, fließt auch nur ein Betriebsstrom über den Hochvoltschalter und dieser Strom kann ohne weiteres durch das Abheben des Brückenkontakts von den Festkontakten getrennt werden.

Gemäß einem Ausführungsbeispiel wird vorgeschlagen, dass die Messschaltung einen Spannungsabfall in einem Spannungsband sensiert. Das Spannungsband ist durch eine untere und eine obere Grenzspannung definiert. Die obere Grenzspannung ist geringer, als die Spannung des an dem Hochvoltschalter anschließbaren Energiespeichers. Nur wenn der Spannungsabfall innerhalb des Spannungsbandes liegt, löst die Messschaltung den Antrieb aus.

Nachfolgend wird der Gegenstand anhand einer Ausführungsbeispiele zeigenden Zeichnung näher erläutert. In der Zeichnung zeigen:
- Fig. 1a-c: eine schematische Ansicht eines Hochvoltschalters nach einem Ausführungsbeispiel;
- Fig. 2: eine schematische Ansicht eines Kraftfahrzeugbordnetzes.

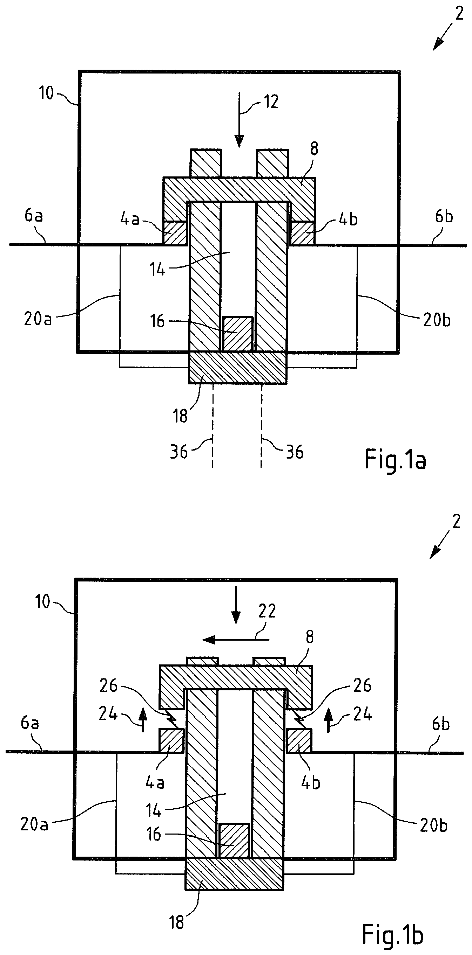

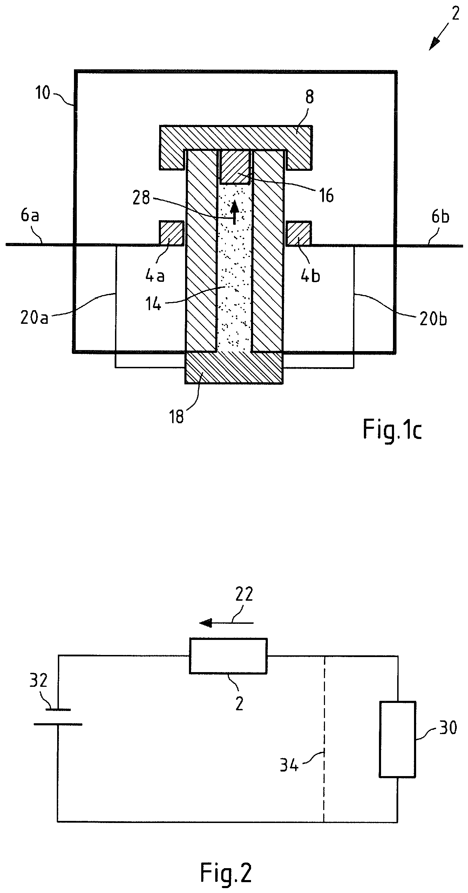

Fig. 1 zeigt einen Hochvoltschalter 2 mit einem ersten Festkontakt 4a, der mit einem ersten Anschlusskontakt 6a verbunden ist sowie einen zweiten Festkontakt 4b, der mit einem zweiten Anschlusskontakt 6b verbunden ist. Die Festkontakte 4a, b sind über einen Brückenkontakt 8 miteinander kurzgeschlossen.

Die Festkontakte 4a, b sowie der Brückenkontakt 6 sind innerhalb eines Gehäuses 10 angeordnet. Innerhalb des Gehäuses 10 sind die Festkontakte 4a, b ortsfest angeordnet und beispielsweise fest an dem Gehäuse verankert. Dagegen ist der Brückenkontakt beweglich, insbesondere parallel zu der Richtung 12 in dem Gehäuse 10 angeordnet.

Die Richtung 12 zeigt eine Kraftrichtung an, mit der der Brückenkontakt 8 gegen die Festkontakte 4a, b gedrückt wird.

Im Bereich des Brückenkontaktes 8, insbesondere mittig des Brückenkontaktes 8 zwischen den Festkontakten 4a, b ist ein Schusskanal 14 angeordnet. Der Schusskanal 14 führt einen Bolzen 16, der über einen pyrotechnischen Antrieb 18 angetrieben werden kann.

Der pyrotechnische Antrieb 18 ist als Messschaltung ausgebildet und mit Messleitungen 20a, 20b mit den Festkontakten 4a, respektive 4b kurz geschlossen. Somit wird mittels des Antriebs 18 eine Spannung zwischen den Festkontakten 4a, b abgegriffen. In dem Antrieb 18 kann ein nicht dargestellter Widerstand vorgesehen sein, der sich bei einer zwischen den Festkontakten 4a, 4b anliegenden Spannung aufgrund des fließenden Stromes erhitzt und so beispielsweise die pyrotechnische Ladung in dem Antrieb 18 zündet.

In der Fig. 1a ist der Schalter 2 in der geschlossenen Stellung dargestellt und der Brückenkontakt 8 bildet einen Kurzschluss zwischen den Festkontakten 4a, 4b. Somit fällt über die Festkontakte 4a, b keine relevante Spannung ab und der Antrieb 18 ist nicht aktiviert.

Über eine nicht dargestellte Mechanik lässt sich der Brückenkontakt 8 von den Festkontakten 4a, b im Normalfall anheben. Im Betriebsfall fließt ein Strom über den Brückenkontakt 8, der ohne weiteres getrennt werden kann, in dem der Brückenkontakt 8 von den Festkontakten 4a, b abgehoben wird. Auch kann der Brückenkontakt 8 von nur einem der Festkontakte 4a, b abgehoben werden und mit dem anderen der Festkontakte 4a, b fest verbunden sein. Diese Funktion ist hinlänglich aus herkömmlichen Relais bekannt.

Im Fehlerfall, insbesondere im Falle eines Kurzschlusses kann es dazu kommen, dass der Strom, der über die Festkontakte 4a, b und den Brückenkontakt 8 fließt ein Vielfaches des Betriebsstroms ist. Ein solcher erhöhter Strom kann zu einer Levitation des Brückenkontaktes 8 von zumindest einem der Festkontakte 4a, b führen. Dies ist in Fig. 1b dargestellt.

In Fig. 1b ist zu erkennen, dass ein großer Strom 22 über den Brückenkontakt 8 fließt. Dieser große Strom 22 kann beispielsweise durch einen Kurzschluss verursacht werden. Aufgrund dieses hohen Stromes 22 kommt es zu einer Levitation des Brückenkontaktes 8 von den Festkontakten 4a, b. Entgegenläufige Ströme an den Stirnseiten zumindest eines der Festkontakte 4a, b und des Brückenkontaktes 8 führen zu einer elektromagnetischen Kraft 24, welche zu einer Abstoßung zwischen dem Brückenkontakt 8 und den Festkontakten 4a, b führt. Aufgrund dieser Abstoßung kommt es zu einer Spaltbildung zwischen dem Brückenkontakt 8 und zumindest einem der Festkontakte 4a, b. Da sehr hohe Ströme 22 geschaltet werden, zündet unmittelbar ein Lichtbogen 24 der über den Spalt zwischen dem Brückenkontakt 8 und zumindest einem der Festkontakte 4a, 4b brennt.

Dieser Lichtbogen 24 hat einen größeren Widerstand als ein unmittelbarer Kontakt zwischen den Festkontakten 4a, b und dem Brückenkontakt, so dass ein Spannungsabfall zwischen den Festkontakten 4a, 4b größer ist als ein Spannungsabfall im geschlossenen Zustand gemäß Fig. 1a.

Aufgrund des erhöhten Spannungsabfalls fließt ein Strom von dem Festkontakt 4a über die Messleitungen 20a, 20b und den Antrieb 18. Dieser Strom führt dazu, dass der Antrieb 18 gezündet wird.

Im Moment des Zündens des Antriebs 18 wird der Bolzen 16 in dem Schusskanal 14 in Richtung 28 beschleunigt und trifft auf den Brückenkontakt 8. Dabei kann der Bolzen 16 den Brückenkontakt 8 durchtrennen oder weiter von den Festkontakten 4a, 4b abheben. Sowohl die Durchtrennung als auch das Abheben führt zu einem Erlöschen des Lichtbogens 24. Der Schalter 2 ist im Anschluss vollständig offen und kein Strom fließt über den Schalter 2.

Fig. 2 zeigt ein Blockschaltbild mit einem Schalter 2, einem Antriebsstrang 30 sowie einem Energiespeicher 32. Im Normalfall fließt ein Betriebsstrom über den Schalter 2, der ohne weiteres durch Anheben des Brückenkontaktes 8 von zumindest einem der Festkontakte 4a, 4b getrennt werden kann.

Im Kurzschlussfall, in der Fig. 2 durch die gestrichelte Linie 34 dargestellt, wird der Antriebsstrang 30 kurzgeschlossen. Der innere Widerstand des Antriebstrangs 30 geht gegen null und der Energiespeicher 32 ist über den Schalter 2 und den Kurzschluss 34 nahezu kurzgeschlossen. Dies führt zu einem sehr hohen Kurzschlussstrom 22, der zu der eben beschriebenen Levitation führt. Der Hochvoltschalter 2 führt dann autark, unabhängig von einem externen Trennsignal eine Trennung wie zuvor beschrieben durch.

Zusätzlich zu der beschriebenen Trennung kann der Hochvoltschalter beziehungsweise der Antrieb 18 über Steuerleitungen 36 getrieben werden. Die Steuerleitungen 36 können beispielsweise im Falle eines Crashs, der insbesondere ohne einen Kurzschluss abläuft, aktiviert werden und somit den Antrieb 18 auch in einem solchen Fall aktivieren. Dies führt auch im Falle eines Fehlzustands, der keinen Kurzschluss bewirkt zu einer sicheren Trennung beziehungsweise Öffnung des Schalters 2. Die Steuerleitung 36 ist dabei jedoch optional. In Falle der Steuerleitung können die Leitungen 20a, 20b elektrisch von der Steuerleitung 36 entkoppelt sein, so dass ein Stromfluss zwischen Steuerleitung 36 und Leitung 6a, b vermieden werden kann.

## Patentansprüche

1. Hochvoltschalter (2) mit
- einem ersten mit einem ersten Festkontakt (4a) verbundenen Anschlusskontakt (6a),
- einem zweiten mit einem zweiten Festkontakt (4b) verbundenen Anschlusskontakt (6b),
- einem zwischen dem ersten Festkontakt und dem zweiten Festkontakt angeordneten, den ersten Festkontakt mit dem zweiten Festkontakt verbindenden Brückenkontakt (8), wobei der Brückenkontakt mit einer Anpresskraft gegen zumindest einen der Festkontakte gedrückt ist und mit einer Abzugskraft von zumindest einem der Festkontakten gelöst werden kann, und
- einem auf den Brückenkontakt in Richtung der Abzugskraft wirkenden Antrieb (18),
**wobei**
- eine Messschaltung einen Spannungsabfall zwischen den Festkontakten im Falle einer Levitation zwischen zumindest einem Festkontakt und dem Brückenkontakt sensiert, **dadurch gekennzeichnet, dass** die Messschaltung abhängig von dem sensierten Spannungsabfall den Antrieb (18) derart ansteuert, dass der Antrieb auf den Brückenkontakt (8) mit einer Kraft in Richtung der Abzugskraft wirkt.

2. Hochvoltschalter nach Anspruch 1,
**dadurch gekennzeichnet,**
- **dass** der Antrieb (18) ein pyrotechnischer Antrieb ist, der durch die abfallende Spannung zwischen den Festkontakten (4a, 4b) auslösbar ist.

3. Hochvoltschalter nach einem der vorangehenden Ansprüche,
**dadurch gekennzeichnet,**
- **dass** der Brückenkontakt (8) federbelastet mit der Anpresskraft gegen zumindest einen der Festkontakte (4a, 4b) gedrückt ist.

4. Hochvoltschalter nach einem der vorangehenden Ansprüche,
**dadurch gekennzeichnet,**
- **dass** die Messschaltung durch die Spannung zwischen den Festkontakten (4a, 4b) gespeist ist.

5. Hochvoltschalter nach einem der vorangehenden Ansprüche,
**dadurch gekennzeichnet,**
- **dass** die Messschaltung passiv ist und insbesondere durch den Antrieb (18) derart gebildet ist, dass der Antrieb bei einem Überschreiten einer Spannung zwischen den Festkontakten (4a, 4b) auslöst.

6. Hochvoltschalter nach einem der vorangehenden Ansprüche,
**dadurch gekennzeichnet,**
- **dass** im Falle der Levitation ein Strom über den Antrieb (18) fließt, der den Antrieb auslöst.

7. Hochvoltschalter nach einem der vorangehenden Ansprüche,
**dadurch gekennzeichnet,**
- **dass** der Antrieb (18) den Brückenkontakt (8) in Richtung der Abzugskraft beschleunigt oder dass der Antrieb den Brückenkontakt in Richtung der Abzugskraft durchtrennt.

8. Hochvoltschalter nach einem der vorangehenden Ansprüche,
**dadurch gekennzeichnet,**
- **dass** der Antrieb (8) einen Bolzen (16) aufweist, der im Falle der Auslösung des Antriebs in Richtung der Abzugskraft auf den Brückenkontakt (8) beschleunigt, insbesondere
- **dass** der Brückenkontakt durch den Bolzen auftrennbar ist.

9. Hochvoltschalter nach Anspruch 8,
**dadurch gekennzeichnet,**
- **dass** der Brückenkontakt (8) durch den Bolzen (16) von beiden Festkontakten (4a, 4b) abhebbar ist.

10. Hochvoltschalter nach Anspruch 8 oder 9,
**dadurch gekennzeichnet,**
- **dass** der Bolzen (16) in einem Gehäuse (10) geführt ist, in dem die Festkontakte (4a, 4b) und der Brückenkontakt (8) angeordnet sind.

11. Hochvoltschalter nach einem der vorangehenden Ansprüche,
**dadurch gekennzeichnet,**
- **dass** der Antrieb (18) zumindest teilweise in dem Gehäuse (10) angeordnet ist in dem die Festkontakte (4a, 4b) und der Brückenkontakt (8) angeordnet sind.

12. Hochvoltschalter nach einem der vorangehenden Ansprüche,
**dadurch gekennzeichnet,**
- **dass** der Antrieb (18) zusätzlich durch ein externes Steuersignal auslösbar ist.

13. Hochvoltschalter nach einem der vorangehenden Ansprüche,
**dadurch gekennzeichnet,**
- **dass** die Messschaltung zur Sensierung einer Spannung in einem Spannungsband eingerichtet ist, wobei das Spannungsband eine untere Grenzspannung und eine obere Grenzspannung aufweist, wobei die obere Grenzspannung geringer ist, als die Spannung des an den Hochvoltschalter anschließbaren Energiespeichers (32) und dass die Messschaltung den Antrieb nur bei einer sensierten Spannung in dem Spannungsband ansteuert.

14. Hochvoltbordnetz in einem Kraftfahrzeug, bei dem der Hochvoltschalter (2) nach einem der vorangehenden Ansprüche elektrisch zwischen einem Energiespeicher (32) und einem Antriebsstrang (30) angeordnet ist.

15. Verfahren zum Betreiben eines Hochvoltschalters (2), insbesondere eines Hochvoltschalter nach einem der vorangehenden Ansprüche, bei dem
- ein zwischen einem ersten Festkontakt (4a) und einem zweiten Festkontakt (4b) angeordneter, den ersten Festkontakt mit dem zweiten Festkontakt verbindender Brückenkontakt (8) mit einer Anpresskraft gegen die Festkontakte gedrückt wird und mit einer Abzugskraft von den Festkontakten gelöst wird, **wobei**
- ein Spannungsabfall zwischen den Festkontakten im Falle einer Levitation zwischen zumindest einem Festkontakt und dem Brückenkontakt sensiert wird, **dadurch gekennzeichnet, dass** abhängig von dem sensierten Spannungsabfall ein Antrieb (18) derart angesteuert wird, dass mittels des Antriebs der Brückenkontakt (8) mit einer Kraft in Richtung der Abzugskraft zumindest in Teilen von den Festkontakten (4a, 4b) entfernt wird.

## Claims

1. High voltage switch (2) with
- a first terminal contact (6a) connected to a first fixed contact (4a),
- a second terminal contact (6b) connected to a second fixed contact (4b),
- a bridge contact (8) arranged between the first fixed contact and the second fixed contact connecting the first fixed contact to the second fixed contact, wherein the bridge contact is pressed against at least one of the fixed contacts with a contact pressure force and can be released from at least one of the fixed contacts with a pull-off force, and
- a drive (8) acting on the bridge contact in the direction of the pull-off force,
wherein
- a measuring circuit senses a voltage drop between the fixed contacts in the event of levitation between at least one fixed contact and the bridge contact, **characterized in that**
- The measuring circuit, depending on the sensed voltage drop, controls the drive (18) in such a way that the drive acts on the bridge contact (8) with a force in the direction of the pull-off force.

2. High voltage switch according to claim 1,
**characterized in that**
- the drive (18) is a pyrotechnic drive which can be triggered by the voltage drop between the fixed contacts (4a, 4b).

3. High-voltage switch according to one of the preceding claims,
**characterized in that**
- the bridge contact (8) is in a spring-loaded way pressed against at least one of the fixed contacts (4a, 4b) with the contact pressure force.

4. High-voltage switch according to one of the preceding claims,
**characterized in that**
- the measuring circuit is fed by the voltage between the fixed contacts (4a, 4b).

5. High voltage switch according to one of the preceding claims,
**characterized in that**
- the measuring circuit is passive and is formed in particular by the drive (18) in such a way that the drive triggers when a voltage between the fixed contacts (4a, 4b) is exceeded.

6. High voltage switch according to one of the preceding claims,
**characterized in that**
- in case of levitation a current flows via the drive (18), which triggers the drive.

7. High voltage switch according to one of the preceding claims,
**characterized in that**
- the drive (18) accelerates the bridge contact in the direction of the pull-off force or that the drive cuts the bridge contact (8) in the direction of the pull-off force.

8. High voltage switch according to one of the preceding claims,
**characterized in that**
- the drive (18) has a bolt (16) which accelerates in the direction of the pull-off force onto the bridge contact (8) in the event that the drive is triggered, in particular
- that the bridge contact can be separated by the bolt.

9. High-voltage switch according of claim 8,
**characterized in that**
- the bridge contact (8) can be lifted from both fixed contacts (4a, 4b) by the bolt (16).

10. High voltage switch according to claim 8 or 9,
**characterized in that**
- the bolt (16) is guided in a housing (10) in which the fixed contacts (4a, 4b) and the bridge contact (8) are arranged.

11. High-voltage switch according to one of the preceding claims,
**characterized in that**
- the drive (18) is at least partly arranged in the housing (10) in which the fixed contacts (4a, 4b) and the bridge contact (8) are arranged.

12. High voltage switch according to one of the preceding claims,
**characterized in that**
- the drive (18) can be additionally triggered by an external control signal.

13. High voltage switch according to one of the preceding claims,
**characterized in that**
- the measuring circuit is arranged to sensing a voltage in a voltage band, wherein the voltage band has a lower limit voltage and an upper limit voltage, the upper limit voltage being lower than the voltage of the energy storage (32) which can be connected to the high-voltage switch, and the measuring circuit activates the drive only for a sensed voltage inside the voltage band.

14. High-voltage on-board power supply network in a motor vehicle, in which the high-voltage switch (2) according to one of the preceding claims is arranged electrically between an energy storage (32) and a drive train (30).

15. Method for operating a high-voltage switch (2), in particular a high-voltage switch according to one of the preceding claims, with which
- a bridge contact (8) arranged between a first fixed contact (4a) and a second fixed contact (4b), connecting the first fixed contact (4a) with the second fixed contact (4b), is pressed against the fixed contacts with a contact pressure force and is released from the fixed contacts with a pull-off force, wherein
- a voltage drop between the fixed contacts in the event of levitation between at least one fixed contact and the bridge contact is sensed,
**characterized in that**
- a drive is triggered depending on the sensed voltage drop in such a way that the bridge contact (8) is removed from the fixed contacts (4a, 4b) at least partly by means of the drive with a force in the direction of the pull-off force.

## Revendications

1. Commutateur haute tension (2) avec
- un premier contact de connexion (6a) relié à un premier contact fixe (4a),
- un deuxième contact de connexion (6b) relié à un deuxième contact fixe (4b),
- un contact en pont (8) disposé entre le premier contact fixe et le deuxième contact fixe et reliant le premier contact fixe au deuxième contact fixe,
- où le contact en pont est pressé contre au moins l'un des contacts fixes avec une force de pression et pouvant être détaché d'au moins l'un des contacts fixes avec une force d'extraction, et
- un entraînement (18) agissant sur le contact en pont dans le sens de la force d'extraction,
- où un circuit de mesure détecte une chute de tension entre les contacts fixes dans le cas d'une lévitation entre au moins un contact fixe et le contact en pont, **caractérisé**
- **en ce que** le circuit de mesure commande l'entraînement (18) en fonction de la chute de tension détectée de telle sorte que l'entraînement agit sur le contact en pont (8) avec une force dans le sens de la force d'extraction.

2. Commutateur haute tension selon la revendication 1,
**caractérisé**
- **en ce que** l'entraînement (18) est un entraînement pyrotechnique qui peut être déclenché par la tension décroissante entre les contacts fixes (4a, 4b).

3. Commutateur à haute tension selon l'une des revendications précédentes, **caractérisé**
- **en ce que** le contact en pont (8) est pressé par ressort avec la force de pression contre au moins l'un des contacts fixes (4a, 4b).

4. Commutateur haute tension selon l'une des revendications précédentes, **caractérisé**
- **en ce que** le circuit de mesure est alimenté par la tension entre les contacts fixes (4a, 4b).

5. Commutateur haute tension selon l'une des revendications précédentes, **caractérisé**
- **en ce que** le circuit de mesure est passif et est notamment formé par l'entraînement (18) de telle sorte que l'entraînement se déclenche en cas de dépassement d'une tension entre les contacts fixes (4a, 4b).

6. Commutateur haute tension selon l'une des revendications précédentes, **caractérisé**
- **en ce que**, en cas de lévitation, un courant circule dans l'entraînement (18), lequel déclenche l'entraînement.

7. Commutateur haute tension selon l'une des revendications précédentes, **caractérisé**
- **en ce que** l'entraînement (18) accélère le contact en pont (8) dans le sens de la force d'extraction ou
- **en ce que** l'entraînement sépare le contact en pont dans le sens de la force d'extraction.

8. Commutateur haute tension selon l'une des revendications précédentes, **caractérisé**
- **en ce que** l'entraînement (18) présente un goujon (16) qui, en cas de déclenchement de l'entraînement, accélère dans le sens de la force d'extraction sur le contact en pont (8), en particulier
- **en ce que** le contact en pont peut être séparé par le goujon.

9. Commutateur haute tension selon la revendication 8,
**caractérisé**
- **en ce que** le contact en pont (8) peut être soulevé des deux contacts fixes (4a, 4b) par le goujon (16).

10. Commutateur haute tension selon la revendication 8 ou 9,
**caractérisé**
- **en ce que** le goujon (16) est guidé dans un boîtier (10) dans lequel sont disposés les contacts fixes (4a, 4b) et le contact en pont (8).

11. Commutateur haute tension selon l'une des revendications précédentes, **caractérisé**
- **en ce que** l'entraînement (18) est disposé au moins partiellement dans le boîtier (10) dans lequel sont disposés les contacts fixes (4a, 4b) et le contact en pont (8).

12. Commutateur haute tension selon l'une des revendications précédentes, **caractérisé**
- **en ce que** l'entraînement (18) peut en outre être déclenché par un signal de commande externe.

13. Commutateur haute tension selon l'une des revendications précédentes, **caractérisé**
- **en ce que** le circuit de mesure est configuré pour détecter une tension dans une bande de tension, la bande de tension présentant une tension limite inférieure et une tension limite supérieure, la tension limite supérieure étant inférieure à la tension de l'accumulateur d'énergie (32) pouvant être raccordé au commutateur haute tension, et
- **en ce que** le circuit de mesure ne commande l'entraînement que pour une tension détectée dans la bande de tension.

14. Réseau de bord haute tension dans un véhicule automobile, dans lequel le commutateur haute tension (2) selon l'une des revendications précédentes est disposé électriquement entre un accumulateur d'énergie (32) et une chaîne d'entraînement (30).

15. Procédé de fonctionnement d'un commutateur haute tension (2), en particulier d'un commutateur haute tension selon l'une des revendications précédentes, avec lequel
- un contact en pont (8) disposé entre un premier contact fixe (4a) et un deuxième contact fixe (4b) et reliant le premier contact fixe au deuxième contact fixe est pressé contre les contacts fixes avec une force de pression et est détaché des contacts fixes avec une force d'extraction,
- où une chute de tension entre les contacts fixes est détectée dans le cas d'une lévitation entre au moins un contact fixe et le contact en pont,
**caractérisé**
- **en ce qu'**en fonction de la chute de tension détectée, un entraînement (18) est commandé de telle sorte qu'au moyen de l'entraînement, le contact en pont (8) est retiré au moins en partie des contacts fixes (4a, 4b) avec une force dans le sens de la force d'extraction.
